# EUROPEAN PATENT APPLICATION

(11) **EP 2 779 054 A1**
(43) Date of publication of application: **17.09.2014**
(21) Application number: 13159495.4
(22) Date of filing: 15.03.2013
(51) Int. Cl.: G06Q 10/10

(54) **Shared document editing and voting using active stylus based touch-sensitive displays**

(71) Applicant: BlackBerry Limited, Waterloo, ON N2K 0A7 (CA)
(72) Inventor: Kreek, Conrad A., Waterloo Ontario N2L 3W8 (CA); Klassen, Gerhard Dietrich, Waterloo Ontario N2L 3W8 (CA)
(74) Representative: Noble, Nicholas

(57) **Abstract**

An electronic meeting is attended by participants with touch-sensitive display devices. An electronic meeting server allows a group of selected participants to edit a shared document during the meeting. Another group of participants may cast votes during the meeting using objects at least partially created during the meeting. Each participant has an active stylus for interfacing with a touch-sensitive display device during the meeting. The active stylus has a stylus identification signal associated with each participant. The stylus identification signal allows for selection and management of the editing and voting groups and allows multiple participants to share a touch-sensitive display device.

## Description

### FIELD OF THE DISCLOSURE

The present disclosure generally relates to an electronic device with a touch-sensitive display and an active stylus used during an electronic meeting.

### BACKGROUND

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart telephones, wireless personal digital assistants (PDAs), and laptop computers with wireless 802.11 or Bluetooth capabilities.

A touch-sensitive display, also known as a touchscreen display, is particularly useful on handheld devices including PDAs, smart phones and tablets, for example, which are small and have limited space for user input and output. The information rendered on the touch-sensitive displays may be displayed and modified with an active stylus depending on the functions and operations being performed.

Electronic meetings allowed and environment where multiple participants viewing multiple electronic device platforms to collaborate on the editing of and voting for elements of shared documents even though they may be attending the meeting at various locals.

Improvements in electronic devices with touch-sensitive displays in this environment are desirable.

### BRIEF DESCRIPTION OF THE DRAWINGS

The accompanying figures in which like reference numerals refer to identical or functionally similar elements throughout the separate views, and which together with the detailed description below are incorporated in and form part of the specification, serve to further illustrate various embodiments and to explain various principles and advantages in accordance with the present disclosure, in which:

FIG. 1 shows a representative block diagram of a system for providing shared document editing and voting using an active stylus based touch-sensitive display device.

FIG. 2 shows a representative block diagram of an active stylus.

FIG. 3 shows a representative flow diagram of the system for providing shared document editing and voting using active stylus based touch-sensitive display devices.

FIG. 4 shows a representative example of a participant using an active stylus to make non-contact motions in close proximity to a touch-sensitive display device.

FIG. 5 shows a representative illustration of a shared document being edited and voted upon using active stylus based touch-sensitive display devices.

FIG. 6 shows a representation of the shared document with edit tracking and stylus identifications authorized to make edits to the shared document.

FIG. 7 shows a representative example of electronic meeting voting using active stylus based touch-sensitive display devices.

### DETAILED DESCRIPTION

While detailed embodiments are disclosed herein, it is to be understood that the disclosed embodiments are merely examples and that the devices, systems and methods described herein can be embodied in various forms. Therefore, specific structural and functional details disclosed herein are not to be interpreted as limiting, but merely as a basis for the claims and as a representative basis for teaching one of ordinary skill in the art to variously employ the disclosed subject matter in virtually any appropriately detailed structure and function. Further, the terms and phrases used herein are not intended to be limiting, but rather, to provide an understandable description. Additionally, unless otherwise specifically expressed or clearly understood from the context of use, a term as used herein describes the singular or the plural of that term.

In one aspect, there is provided a method comprising: enabling a first edit of a shared document during an electronic meeting in response to a first criterion matching both a first identification signal indicative of a first active stylus and a first non-contact motion by the first active stylus in close proximity to a first touch-sensitive display device rendering the shared document, and adding the first edit to the shared document in response to both the enabling of the first edit and a first contact motion by the first active stylus contacting the first touch-sensitive display device.

In another aspect, there is provided a method comprising: rendering on a one touch-sensitive display device a shared document during an electronic meeting, the shared document including a first object at least partially created at a first object location during the electronic meeting, and a second object at least partially created at a second object location during the electronic meeting; and increasing a first object vote count in response to a detecting of a one active stylus contacting the first object location.

In another aspect, there is provided an apparatus comprising: a controller configured for enabling a first edit of a shared document during an electronic meeting in response to a first criterion matching both a first identification signal indicative of a first active stylus and a first non-contact motion by the first active stylus in close proximity to a first touch-sensitive display device rendering the shared document; and an editor configured for adding the first edit to the shared document in response to both the enabling of the first edit and a first contact motion by the first active stylus contacting the first touch-sensitive display device.

In another aspect, there is provided an apparatus comprising: a one touch-sensitive display device configured to render a shared document during an electronic meeting, the shared document including a first object located at a first object location, the first object at least partially created on the shared document during the electronic meeting, and a second object located at a second object location, the second object at least partially created on the shared document during the electronic meeting; and a vote counter configured for increasing a first object vote count in response to a detecting of a one active stylus contacting the first object location.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device having a touch-sensitive display and an active stylus, which is a portable electronic device in the embodiments described herein. Examples of the electronic device includes a Personal Information Manager (PIM), Personal Digital Assistant (PDA), a pager, a mobile phone, a cellular phone, a smart-phone, a super-phone, a tablet computer, and a laptop. The electronic device may also be a portable electronic device without wireless communication capabilities, such as a handheld electronic game device, digital photograph album, digital camera, or other device. Furthermore, the electronic device need not be portable and may be a stationary unit such as a Personal Computer (PC) or a workstation.

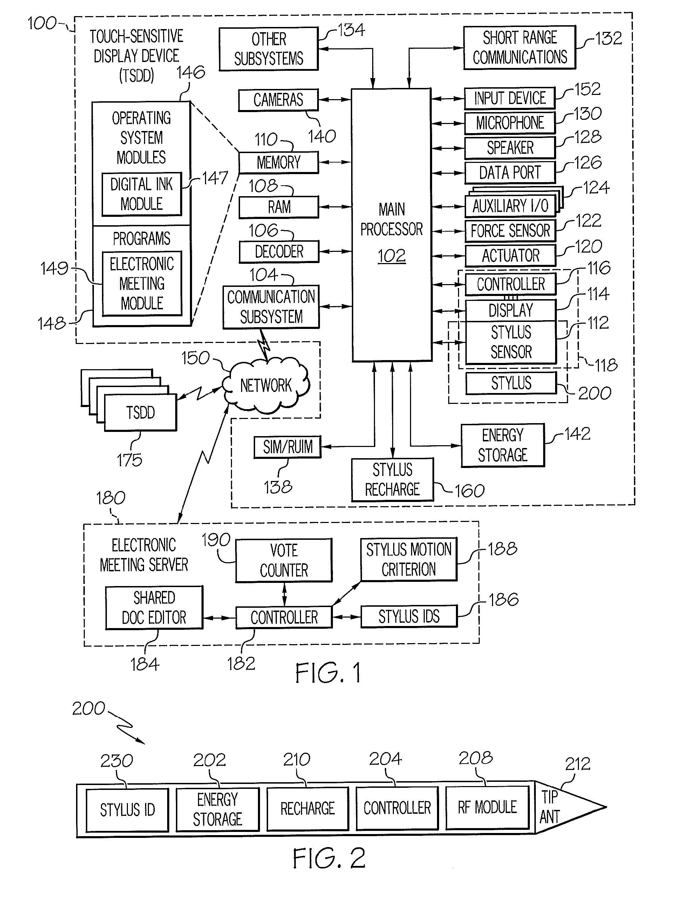

FIG. 1 shows a representative block diagram of a system for providing shared document editing and voting using an active stylus based touch-sensitive display device. The system includes a touch-sensitive display device **100** (TSDD) an electronic meeting server **180,** and an active stylus **200.** The touch-sensitive display device **100** includes multiple components, such as a processor **102** that controls the overall operation of the touch-sensitive display device **100.** Communication functions, including data and voice communications, are performed through a communication subsystem **104.** Data received by the touch-sensitive display device **100** is decompressed and decrypted by a decoder **106.** The communication subsystem **104** receives messages from and sends messages to a wireless network **150.** The wireless network **150** may be any type of wireless network, including, but not limited to, data wireless networks, voice wireless networks, and networks that support both voice and data communications. Energy storage module **142** includes one or more rechargeable batteries, super capacitors, or a port to an external power supply for powering the touch-sensitive display device **100.**

The processor **102** interacts with other components, such as Random Access Memory (RAM) **108** and memory **110.** The processor **102** also interacts a display **114,** a stylus sensor **112** including a touch-sensitive overlay operably connected to a controller **116** that together comprise a touch-sensitive display **118.** The processor **102** also interacts with an auxiliary input/output (I/O) subsystem **124,** a data port **126,** a speaker **128,** a microphone **130,** short-range communications **132,** and other subsystem **134** which may include other device subsystems. Stylus sensor **112** and active stylus form a stylus sensor system **121** which is also able to interface with the touch-sensitive overlay of the stylus sensor **112.** The processor **102** may optionally interact with one or more actuators **120** to provide tactile feedback and one or more force sensors **122** to detect a force imparted on the touch-sensitive display **118.** Interaction with a graphical user interface is performed through the stylus sensor **112.** The processor **102** interacts with the stylus sensor **112** via the controller **116.** Information, such as objects including text, characters, symbols, images, icons, digital ink line segments defined by the active stylus, and other items that may be displayed or rendered on a portable electronic device, is rendered on the touch-sensitive display **118** via the processor **102.** The processor **102** may interact with an orientation sensor **136** such as an accelerometer that may be utilized to detect a direction of gravitational forces or gravity-induced reaction forces. The processor **102** may interact with camera module **140** which may include one or more forward and/or rear facing cameras for photography, video conferencing or for optical recognition of gestures and objects such, as a stylus, for user interface operations. Stylus gestures may result from non-contact motion in close proximity to the touch-sensitive display device or a contact motion by the stylus upon the touch-sensitive display device.

To identify a subscriber for network access, the touch-sensitive display device **100** uses a Subscriber Identity Module or a Removable User Identity Module (SIM/RUIM) card **138** for communication with a network, such as the wireless network **150.** Alternatively, user identification information may be programmed into memory **110.**

The touch-sensitive display device **100** includes an operating system **146** including instructions for implementing at least portions of digital ink module **147,** and software components or programs **148** that are executed by the processor **102** and are typically stored in a persistent, updatable store such as the memory **110.** One such software component includes an electronic meeting module **149** for interfacing with an electronic meeting server during an electronic meeting. Memory **110** receives content from a computer readable medium comprising computer instructions executable on at least one processing unit. Additional applications or programs may be loaded onto the touch-sensitive display device **100** through the wireless network **150,** the auxiliary I/O subsystem **124,** the data port **126,** the short-range communications **132,** or any suitable other subsystem **134.**

A received signal such as a text message, an e-mail message, shared document, or web page download is processed by the communication subsystem **104** and input to the processor **102.** The processor **102** processes the received signal for output to the display **114** and/or to the auxiliary I/O subsystem **124.** A subscriber may generate data items, for example e-mail messages, which may be transmitted over the wireless network **150** through the communication subsystem **104.** For voice communications, the overall operation of the touch-sensitive display device **100** is similar. The speaker **128** outputs audible information converted from electrical signals, and the microphone **130** converts audible information into electrical signals for processing.

The touch-sensitive display **118** may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display may include a capacitive touch-sensitive overlay within stylus sensor **112.** The stylus sensor **112** may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

In one implementation, stylus sensor **112** employs touch-sensitive display **118** having a planar upper surface for supporting work sheets, e.g., rendered objects including drawings, charts, maps or the like. The touch-sensitive display **118** also has a generally planar grid of conductors underneath the work surface.

The conductor grid is composed typically of a plurality of straight, parallel, usually equi-spaced conductors extending in a horizontal or x-direction, and a plurality of straight, parallel, usually equi-spaced conductors extending in a vertical or y-direction. The stylus typically has an elongated, cylindrical body terminating in a conical tip. Near the tip, the stylus contains an antenna or an electrical coil disposed concentrically with the central axis of the stylus body.

Determination of stylus location and angle of tilt either contacting the display or in close proximity to the touch-sensitive display device is known to those familiar with the art. In one implementation, the active stylus wirelessly transmits electrical signals including a beacon signal that may be analyzed to determine a location, motion and orientation of the active stylus. The electrical signals are received by the grid conductors of the stylus sensor. Then, the grid conductors are scanned by detection circuitry to yield a series of voltage waveforms of various amplitudes corresponding to the location of the conductors with respect to the stylus. The voltage waveforms obtained from the conductors are analyzed to obtain a calculation of the position of the stylus tip on or in close proximity with the upper surface of touch-sensitive display **118.** The stylus tilt of the active stylus may also be determined with further waveform analysis. The voltage waveform typically has a pair of spaced characteristic peaks whose magnitudes correspond to pen tilt. In one implementation, the stylus tilt of the stylus is determined by analyzing either the peaks or the magnitudes of the waveform at "points" (i.e., voltages corresponding to specific conductors, or, simply stated, conductor voltages) at fixed distances on either side of the apparent pen position, and inside the waveform peaks. The antenna or coil at the tip of the stylus may further have an asymmetrical wireless radiation pattern to help facilitate determination of the stylus tilt.

Furthermore, the active stylus may also sense the stylus contact pressure exerted by the user of the stylus when using the stylus to contact the touch-sensitive display and then transmit a stylus pressure signal included within its transmitted signals. The stylus may also have at least one button activated by a button press by the user and the status of the button may also be included within the transmitted signals.

One or more touches, also known as touch contacts or touch events, may be detected by the touch-sensitive display **118.** The processor **102** may determine attributes of the touch, including a location of a touch. Touch location data may include an area of contact or a single point of contact, such as a point at or near a center of the area of contact. The location of a detected touch may include x and y components, e.g., horizontal and vertical components, respectively, with respect to one's view of the touch-sensitive display **118.** For example, the x location component may be determined by a signal generated from one touch sensor, and the y location component may be determined by a signal generated from another touch sensor. A signal is provided to the controller **116** in response to detection of a touch. A touch may be detected from any suitable object, such as a stylus, finger, thumb, appendage, or other items, depending on the nature of the touch-sensitive display **118.** Multiple simultaneous touches may be detected.

The touch-sensitive display **118** is also configured to detect contact and non-contact gestures. A contact gesture, such as a swipe, is a type of touch that begins at an origin point and continues to a finishing point while touch contact is maintained. A swipe may be long or short in distance, or duration, or both distance and duration. Two points of the swipe may be utilized to determine a vector that describes a direction of the swipe. The duration of the swipe may be determined from the origin point and finishing point of the swipe in time. A non-contact gesture is a motion of the active stylus in close proximity to the display and includes a side-to-side active stylus motion or a back-and-forth active stylus motion. The processor **102** receives data from the controller **116** to determine the direction, magnitude, and duration of the gesture. The gesture may be tracked and a plurality of sub-vectors determined for each gesture. The final sub-vector may be utilized to determine a distance and duration of a final portion of the gesture. The processor **102** receives data from the controller **116** to determine the speed of the gesture based on the distance and duration of the final portion of the active stylus motion.

Actuators **120** may be disposed beneath the touch-sensitive display **118** and may be depressed or activated by applying force to overcome the actuation force of the actuator **120.** The actuators **120** may provide input to the processor **102** when actuated. Actuation of the actuator(s) **120** may result in provision of tactile feedback. Force sensors **122** may work in combination with the actuators to measure an applied force. Force generally refers to force measurements, estimates, and/or calculations, such as pressure, deformation, stress, strain, force density, force-area relationships, thrust, torque, and other effects that include force or related quantities.

Those familiar with the art will appreciate that there are numerous ways to determine stylus location, tilt and pressure either in contact with or in close proximity to the touch-sensitive display device that realize the function of stylus sensor system **121.** For example, stylus location and tilt can be determined by optical triangulation with a pair of cameras included within camera module **140** monitoring one or more fiducials of the stylus, or sonic, ultrasonic audio or radio frequency triangulation using time-of-flight signaling and triangulation. These approaches can be performed with either an active or a passive stylus. Stylus pressure can be sensed in a number of ways including the use of force sensor **122.** The stylus tilt of the stylus may also be determined by an accelerometer or gyro included within the stylus. Further, the tilt of the touch-sensitive display can be determined with an accelerometer or gyro associated with the touch-sensitive display. The stylus tilt of the stylus relative to the touch-sensitive display can be calculated by comparing the stylus and touch-sensitive display tilt angles.

Also included is a stylus recharge module **160** that manages recharging of the active stylus **200** when coupled to the touch-sensitive display device **100.** In one implementation the stylus recharge module **160** transfers energy from energy storage module **142** to the active stylus **200.**

Electronic meeting servicer **180** hosts electronic meetings between participants having touch-sensitive display device **100** and touch-sensitive display devices **175** that are coupled through wireless network **150.** The electronic meeting server includes a controller **182** configured to control operation of its various components. Shared document editor **184** is configured to add edits to a shared document and facilitate viewing of the shared document by electronic meeting participants having touch-touch-sensitive display devices. To enable editing, the controller compares criterion including stylus identification signals **186** and stylus motion signals **188** with signals received from electronic touch-sensitive display devices **100** and **175.** In order to facilitate voting by participants during an electronic meeting. Objects at least partially edited during the electronic meeting by shared document editor **184** are rendered at locations on each touch-sensitive display device. If an active stylus contacts one of the objects during a voting portion of the electronic meeting, then a vote count corresponding to the object is increased. Votes are then tallied in accordance with voting criterion. Those familiar with the art will appreciate that the functionality of the electronic meeting server may be included within a touch-sensitive display device participating in or hosting the electronic meeting.

FIG. 2 shows a representative block diagram of an active stylus. Active stylus **200** has an energy storage module **202,** which may include a battery, super capacitor or other energy storage device, for powering the operation of the active stylus. Controller **204** monitors any input button (not shown) received on one or more buttons of the stylus operable by a user, and a pressure sensor (not shown) to activate the operation of the RF module **208.** When a slight pressure on the tip **212** of the stylus is detected, the controller powers on the RF module which transmits RF signals trough an antenna at least partially included at tip **212.** The RF signals includes a beacon signal that allows for determination of stylus proximity and movement for a non-contact gesture in close proximity to the touch-sensitive display, stylus contact location on the touch-sensitive display **118** as well as a stylus tilt of the stylus relative to the touch-sensitive display. Within the RF signals, the controller can include additional signals for processing by touch-sensitive display device **100** including a status signal indicative of the energy storage level of the energy storage module **202.** The status signal could be a representation of the amount of energy left in the energy storage module (a signal ranging from 100% to 0% for example), or could indicate whether or not the amount of energy left in the energy storage module is low, (below 10% for example). In one example, below 10% would be a low energy level and 10% or above would not be a low energy level. When the energy level drops from 10% or above to below 10% indicates that the energy storage level of the active stylus has transitioned from a first level to a second level. The determination of this first transition may be made by controller **204** monitoring the energy storage module **202** or by the touch-sensitive display device **100** receiving a status signal from the active stylus **200** indicative of the energy level of the active stylus and determining the transition at processor **102** of the touch-sensitive display device.

Energy storage module **202** provides operating power for electrical components of the active stylus **200,** including the controller **204** and RF module **208.** Thus, energy is reduced from the energy storage module when the active stylus is in use, thereby reducing the energy storage level of the active stylus while defining the digital ink line segment. Recharge module **210** is an optional module that provides for the reception of energy from the stylus recharge module **160** and the increase of energy stored in the energy storage module **202.** An optional energy harvest module (not shown) provides for the harvesting of motion energy imparted to the stylus and increasing the energy stored in the energy storage module. For example, a user may impart an external source of energy for the active stylus by providing a shaking action of the active stylus. Energy harvesting systems are known to those familiar with the art and include a weight coupled a piezoelectric element for converting motion energy imparted to the active stylus into electrical energy for recharging the energy storage module or a magnet moving in relation to an inductor for converting motion energy imparted to the active stylus into electrical energy for recharging the energy storage module.

In continuing with the above example, as additional energy is received and added to energy storage module **202,** the energy level rises from below 10% to 10% or above indicating that the energy storage level of the active stylus has transitioned from the second level to back to the first level. The determination of this second transition may be made by controller **204** monitoring the energy storage module **202** or by the touch-sensitive display device **100** receiving a status signal from the active stylus **200** indicative of the energy level of the active stylus and determining the transition at touch-sensitive display processor **102.**

Stylus identification **230** provides a unique identification signal indicative of the active stylus. In one implementation, each touch-sensitive display device **100** and **175** has an active stylus, each with a unique identification signal. If the identification signal is associated with a user of the active stylus, then the user could use any of a number of different touch-sensitive display devices while preserving the identity of the user during a participation in an electronic meeting, or multiple users could use a single touch-sensitive display device during an electronic meeting and have their shared document contributions made with their active stylus preserved. The controller **204** includes the stylus identification **230** signal within in the RF signals transmitted by RF module **208.**

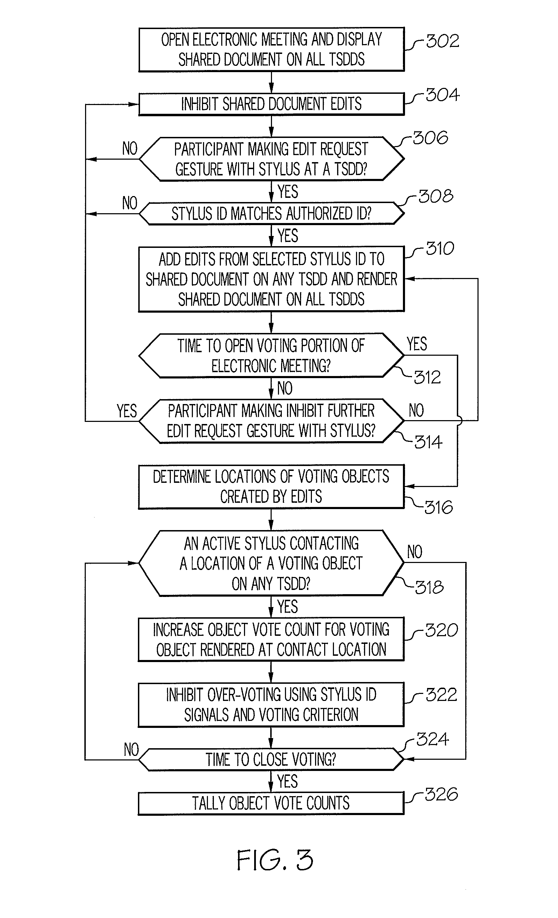

FIG. 3 shows a representative flow diagram of the system for providing shared document editing and voting using active stylus based touch-sensitive display devices. Step **302** opens an electronic meeting and renders the shared document on all touch-sensitive display devices participating in the electronic meeting. Step **304** initially inhibits edits to the shared document. Step **306** determines if an active stylus is making a non-contact motion in close proximity to a touch-sensitive display device that satisfies an active stylus motion signal **188** criterion for editing the shared document.

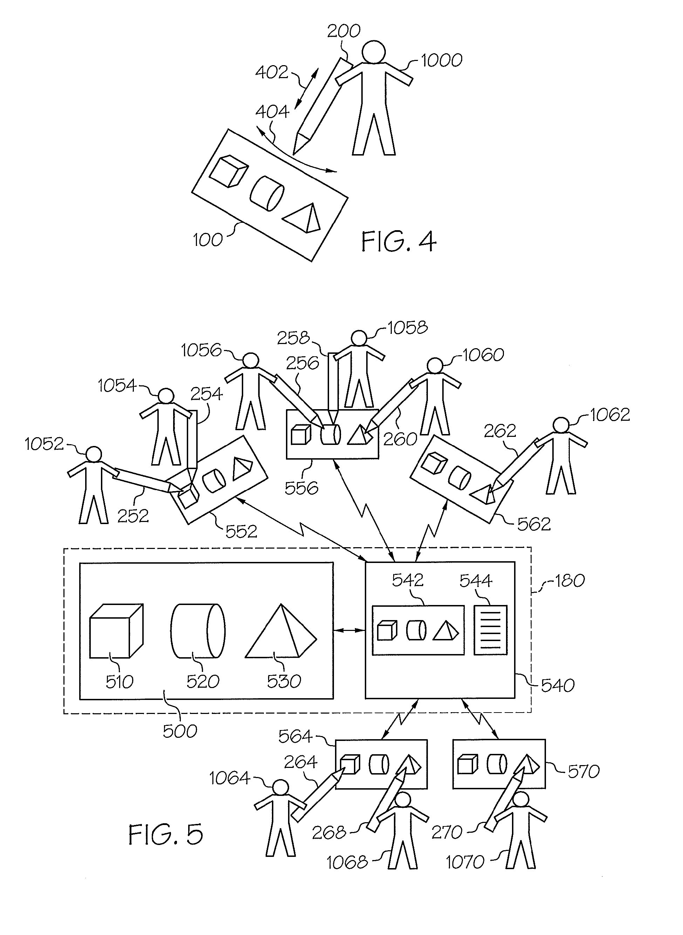

FIG. 4 shows a representative example of a participant using an active stylus to make non-contact motions in close proximity to a touch-sensitive display device. User 1000 holds active stylus **200** in close proximity to touch-sensitive display device **100.** An up-and-down motion of the active stylus is shown at motion **402** and a side-to-side motion of the active stylus is shown at motion **404.**

In one example, the motion of the active stylus at step **306** that satisfies the criterion is an up-and-down non-contact motion **402** relative to the touch-sensitive display. Those familiar with the art will appreciate that this determination of satisfaction of this criterion may be made within the touch-sensitive display device **100** and the determination communicated to the electronic meeting server **180,** or the stylus motion information can be communicated from the touch-sensitive display device to the electronic meeting server and the determination made at the electronic meeting server, or the determination may be distributed between the touch-sensitive display device and the electronic meeting server. In one example implementation of the distributed approach, the touch-sensitive display device interprets the stylus motion to be one of a plurality of gestures and communicates a signal indicative of the gesture to the electronic meeting server. Then the electronic meeting server determines if the criterion matches the determined gesture signal.

Step **308** determines if the stylus identification signal matches the remaining criterion of a stylus identification signal **186** authorized to edit the shared document. If not, editing of the document remains inhibited at **304.** The flow diagram executes step **310** if both the criterion matches an appropriate non-contact motion in close proximity to a touch-sensitive display device and the criterion matches the identification signal of the active stylus then the active stylus is selected. Step **310** adds edits from the selected stylus to the shared document. The shared document is then rendered on the touch-sensitive display devices.

If at step **312** it is not time to open the voting portion of the electronic meeting, then step **314** determines if an active stylus is making a non-contact motion in close proximity to a touch-sensitive display device that satisfies a criterion for inhibiting editing of the shared document. In one example, the motion of the active stylus at step **314** that satisfies the criterion is side-to-side non-contact motion **404** relative to the touch-sensitive display. Those familiar with the art will appreciate that the process for this determination of satisfaction of this criterion may be made within the touch-sensitive display device or within the electronic meeting server or otherwise distributed. Furthermore, in other examples a number of other motions may be used in place of motions **402** and **404.** If editing is to continue, the flow diagram returns to step **310,** otherwise the flow diagram returns to step **304.** This representative flow diagram shows an implementation where only one active stylus at a time edits the shared document. Those familiar with the art will appreciate that other implementations can allow for a selection of more than one active styli to make concurrent edits to the shared document during an electronic meeting.

FIG. 5 shows a representative illustration of a shared document being edited and voted upon using active stylus based touch-sensitive display devices. Participants **1052-1070** are participating in the electronic meetings, each having a corresponding active stylus **252-270** in use with touch-sensitive display devices **552-570** which are coupled to electronic meeting server **180** via wireless network **150.** Touch-sensitive display device **552** is used by participants **1052** and **1054.** Touch-sensitive display device **556** is used by participants **1056, 1058,** and **1060.** Touch-sensitive display device **562** is used by participant **1062.** Touch-sensitive display device **564** is used by participants **1064** and **1068.** Touch-sensitive display device **570** is used by participant **1070.** Shared document **500** is being edited within electronic meeting server **180** and shows three objects at least partially created during the electronic meeting. The three objects include cube **510,** cylinder **520** and pyramid **530.** Participants **1052-1062** are involved in editing the three objects **510-530** on the shared document **500** during the electronic meeting. Participants **1052** and **1054** are collaborating on editing cube **510** on touch-sensitive display device **552,** participants **1056** and **1058** are collaborating on editing cylinder **520** on touch-sensitive display device **556,** and participants **1060** and **1062** are collaborating on editing pyramid **530** on touch-sensitive display device **556** and **562** respectively. Participants **1064-1070** are observers of the edits of participants **1052-1062** and may participate in the voting phase of the electronic meeting. The use of active stylus identification signals allow participants to share touch-sensitive display devices during the electronic meeting while allowing criterion determinations for each participant to be maintained by the electronic meeting server.

A representation of processes by the electronic meeting server controller is shown within area **540.** A version of the shared document is shown within area **542** where edit tracking is facilitated and a stylus identification list is shown within area **544.**

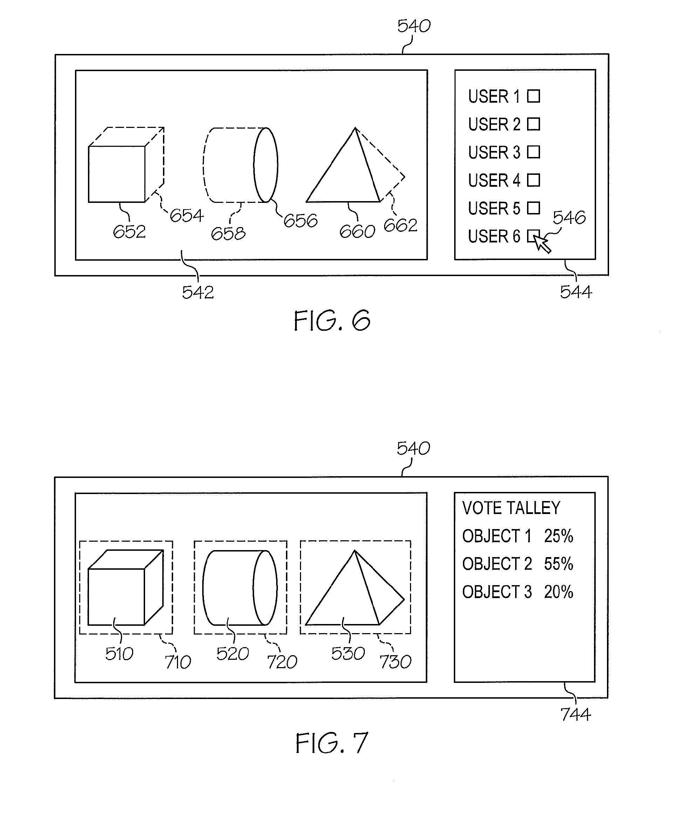

FIG. 6 shows a representation of the shared document with edit tracking and stylus identifications authorized to make edits to the shared document. In this example, edits of participant **1052** with stylus **252** on touch-sensitive display device **552** resulted in the foreground solid lined square **652** portion of cube **510.** Edits of participant **1054** with stylus **254** on touch-sensitive display device **552** resulted in the dashed lined perspective portion **654** of cube **510.** Edits of participant **1056** with stylus **256** on touch-sensitive display device **556** resulted in the solid lined foreground portion **656** of cylinder **520.** Edits of participant **1058** with stylus **258** on touch-sensitive display device **556** resulted in the dashed lined perspective portion **658** of cylinder **520.** Edits of participant **1060** with stylus **260** on touch-sensitive display device **556** resulted in the solid lined perspective portion **660** of pyramid **530.** Edits of participant **1062** with stylus **262** on touch-sensitive display device **562** resulted in the dashed lined perspective portion **654** of pyramid **530.** With the aforementioned information stored with the shared document, it is possible to determine which active stylus made which edits on which touch-sensitive display device at any time after the editing. It should be appreciated that in another implementation, a portion of the objects could be created before the electronic meeting and the objects further edited at the meeting. For example, foreground portions **652, 656** or **660** could have been created on the shared document before the electronic meeting and perspective portions **654, 658** or **662** edited during the meeting, thereby providing for one or more objects at least partially created during the electronic meeting.

Six lines identifying six users are shown within area **554** corresponding to six participants' stylus identifications of styli **252-262** associated with participants **1052-1062.** In the single user editor implementation of the flow diagram of FIG. 3, a check at user six of line **546** indicates that user six is selected to edit the shared document.

FIG. 7 shows a representative example of electronic meeting voting using active stylus based touch-sensitive display devices. A representation of processes by the electronic meeting server controller is shown within area **540.** Cube **510** represents a first object that was at least partially created by edits during the electronic meeting. It is rendered at a first location as indicated by the area of dashed lined square **710.** Cylinder **520** represents a second object that was at least partially created by edits during the electronic meeting. It is rendered at a second location as indicated by the area of dashed lined square **720.** Pyramid **530** represents a third object that was at least partially created by edits during the electronic meeting. It is rendered at a third location as indicated by the area of dashed lined square **730.** Participants **1064-1070** participate in voting based on objects **510-530** that were at least partially created by edits to shared document **500** by participants **1052-1062** during the electronic meeting by contacting locations **710-730** on touch-sensitive display devices **175** with their respective styli **264-270.**

If at step **312** of FIG. 3 it is time to open the voting portion of the electronic meeting, then step **316** determines locations **710-730** of voting objects **510-530** that were at least partially created by edits during the electronic meeting. Step **318** determines if an active stylus is contacting a location of a voting object on a touch-sensitive display device. If not, and if voting is to remain open at step **324,** then the flow diagram returns to step **318.** Otherwise step **320** increases the object vote count for the voting object rendered at the contact location while step **322** inhibits over-voting using stylus identification signals and voting criterion. FIG. 1 shows participant **1064** is voting for object **510** by contacting location **710** on touch-sensitive display device **564** with stylus **264,** and participant **1068** is voting for object **530** by contacting location **730** on touch-sensitive display device **564** with stylus **268,** and participant **1070** is voting for object **530** by contacting location **730** on touch-sensitive display device **570** with stylus **270.** Those familiar with the art will appreciate that any of a multitude of voting criterion may be contemplated at step **322.** Example criterion include: one vote per stylus, two votes per stylus, two unique votes per stylus, a prohibition on voting if a stylus participated in object editing, or a prohibition on voting if a stylus participated in object editing the object being voted for by the stylus. If it is not time to close voting at step **324** then the flow diagram returns to step **318,** otherwise votes are tallied at step **326.** An example vote tally is shown within area **744** of FIG. 7.

The terms "a" or "an", as used herein, are defined as one as or more than one. The term "plurality", as used herein, is defined as two as or more than two. The term "another", as used herein, is defined as at least a second or more. The terms "including" and "having," as used herein, are defined as comprising (i.e., open language). The term "coupled," as used herein, is defined as "connected," although not necessarily directly, and not necessarily mechanically. "Communicatively coupled" refers to coupling of components such that these components are able to communicate with one another through, for example, wired, wireless or other communications media. The term "communicatively coupled" or "communicatively coupling" includes, but is not limited to, communicating electronic control signals by which one element may direct or control another. The term "configured to" describes hardware, software or a combination of hardware and software that is adapted to, set up, arranged, commanded, altered, modified, built, composed, constructed, designed, or that has any combination of these characteristics to carry out a given function. The term "adapted to" describes hardware, software or a combination of hardware and software that is capable of, able to accommodate, to make, or that is suitable to carry out a given function.

The terms "controller", "computer", "server", "client", "computer system", "computing system", "personal computing system", or "processing system" describe examples of a suitably configured processing system adapted to implement one or more embodiments of the present disclosure. Any suitably configured processing system is similarly able to be used by embodiments of the present disclosure, for example and not for limitation, a personal computer, a laptop computer, a tablet computer, a personal digital assistant, a workstation, or the like. A processing system may include one or more processing systems or processors. A processing system can be realized in a centralized fashion in one processing system or in a distributed fashion where different elements are spread across several interconnected processing systems.

The terms "computing system", "computer system", and "personal computing system", describe a processing system that includes a user interface and which is suitably configured and adapted to implement one or more embodiments of the present disclosure. The terms "network", "computer network", "computing network", and "communication network", describe examples of a collection of computers and devices interconnected by communications channels that facilitate communications among users and allows users to share resources.

The term "electronic device" is intended to broadly cover many different types of electronic devices used by persons, and that include a user interface that can interoperate with a user. For example, and not for any limitation, an electronic device can include any one or a combination of the following: a two-way radio, a cellular telephone, a mobile phone, a smartphone, a two-way pager, a wireless messaging device, a personal computer, a laptop personal computer, a tablet computer, a gaming unit, a personal digital assistant, and other similar electronic devices.

Although specific embodiments of the subject matter have been disclosed, those having ordinary skill in the art will understand that changes can be made to the specific embodiments without departing from the spirit and scope of the disclosed subject matter. The scope of the disclosure is not to be restricted, therefore, to the specific embodiments, and it is intended that the appended claims cover any and all such applications, modifications, and embodiments within the scope of the present disclosure.

## Claims

1. A method comprising:
enabling a first edit of a shared document (500) during an electronic meeting in response to a first criterion matching both a first identification signal (308) indicative of a first active stylus (252) and a first non-contact motion (306) by the first active stylus in close proximity to a first touch-sensitive display device (552) rendering the shared document; and
adding the first edit to the shared document in response to both the enabling of the first edit and a first contact motion by the first active stylus (310) contacting the first touch-sensitive display device.

2. The method according to claim 1 further comprising:
enabling a second edit of the shared document during the electronic meeting in response to a second criterion matching both a second identification signal indicative of a second active stylus and a second non-contact motion by the second active stylus in close proximity to a second touch-sensitive display device (556) rendering the shared document; and
adding the second edit to the shared document in response to both the enabling of the second edit and a second contact motion by the second active stylus upon the second touch-sensitive display device.

3. The method according to claim 2 further comprising:
enabling a third edit of the shared document during the electronic meeting in response to a third criterion matching both a third identification signal indicative of a third active stylus and a third non-contact motion by the third active stylus in close proximity to the first touch-sensitive display device rendering the shared document; and
adding the third edit to the shared document in response to both the enabling of the third editing and a third contact motion by the third active stylus upon the first touch-sensitive display device.

4. The method according to claim 3 further comprising:
inhibiting a fourth edit of the shared document during the electronic meeting in response to a third criterion matching both a fourth identification signal indicative of a fourth active stylus not matching an authorized identification signal (308).

5. The method according to claim 4 further comprising:
inhibiting a fifth edit of the shared document by the first active stylus in response to a fourth criterion matching both the first identification signal indicative of the first active stylus and a fourth non-contact motion different from the first non-contact motion by the first active stylus in close proximity to the first touch-sensitive display device.

6. The method according to claim 2, 3, 4, or 5 wherein the shared document includes
a first object (510) at least partially created at a first object location by the first edit, and
a second object (520) is at least partially created at a second object location by the second edit, the method further comprising:
rendering on a one touch-sensitive display device (564) the shared document during the electronic meeting; and
increasing a first object vote count in response to a detecting of a one active stylus contacting the first object location (320).

7. The method according to claim 6 wherein
the detecting of the one active stylus includes detecting a one identification signal indicative of the one active stylus,
the increasing the first object vote count further inhibits increasing the first object vote count in response to a determination that the one active stylus indicated by the one identification signal is associated with a first voting criterion inhibiting the increasing of the first object vote count (322).

8. The method according to claim 6, or 7 further comprising
increasing a second object vote count in response to a detecting of another active stylus contacting the second object location.

9. The method according to claim 8 wherein
the detecting of the other active stylus includes detecting another identification signal indicative of the other active stylus,
the increasing the second object vote count further inhibits the increasing of the second object vote count in response to a determination that the other active stylus indicated by the other identification signal is associated with a second voting criterion inhibiting the increasing of the second object vote count.

10. The method according to claim 9 further comprising:
rendering on another touch-sensitive display device (570) the shared document during the electronic meeting; and
increasing a second object vote count in response to a detecting of another active stylus contacting the second object location on the other touch-sensitive display device.

11. A method comprising:
rendering on a one touch-sensitive display device (564) a shared document (500) during an electronic meeting, the shared document including
a first object (510) at least partially created at a first object location during the electronic meeting, and
a second object (530) at least partially created at a second object location during the electronic meeting; and
increasing a first object vote count in response to a detecting of a one active stylus contacting the first object location (320).

12. The method according to claim 11 further comprising:
rendering on another touch-sensitive display device (570) the shared document during the electronic meeting; and
increasing a second object vote count in response to a detecting of another active stylus contacting the second object location on the other touch-sensitive display device.

13. An apparatus comprising:
a controller (182) configured for enabling a first edit of a shared document (500) during an electronic meeting in response to a first criterion matching both a first identification signal indicative of a first active stylus and a first non-contact motion by the first active stylus in close proximity to a first touch-sensitive display device rendering the shared document (310); and
an editor (184) configured for adding the first edit to the shared document in response to both the enabling of the first edit and a first contact motion by the first active stylus contacting the first touch-sensitive display device.

14. The apparatus according to claim 13 further comprising:
the controller further configured to enable a second edit of the shared document during the electronic meeting in response to a second criterion matching both a second identification signal indicative of a second active stylus and a second non-contact motion by the second active stylus in close proximity to a second touch-sensitive display device rendering the shared document; and
the editor further configured to add the second edit to the shared document in response to both the enabling of the second edit and a second contact motion by the second active stylus upon the second touch-sensitive display device.

15. The apparatus according to claim 14 wherein the shared document includes
a first object (510) at least partially created at a first object location by the first edit, and
a second object (530) at least partially created at a second object location by the second edit, the apparatus further comprising:
a one touch-sensitive display device (564) for rendering the shared document during the electronic meeting; and
a vote counter (190) configured for increasing a first object vote count in response to a detecting of a one active stylus (264) contacting the first object location.
